# EUROPEAN PATENT SPECIFICATION

(11) **EP 4 686 847 B1**
(45) Date of publication and mention of the grant of the patent: **18.11.2026**
(21) Application number: 25190239.1
(22) Date of filing: 17.07.2025
(51) Int. Cl.: F16C 19/38, F16C 23/08, F16C 33/46, F03D 80/70

(54) **SPHERICAL ROLLER BEARING HAVING ASYMMETRIC CAGE POCKETS**
PENDELROLLENLAGER MIT ASYMMETRISCHEN KÄFIGTASCHEN
ROULEMENT À ROULEAUX SPHÉRIQUES AYANT DES POCHES DE CAGE ASYMÉTRIQUES

(30) Priority: 30.07.2024 DE 102024207178
(43) Date of publication of application: 04.02.2026
(73) Proprietor: Aktiebolaget SKF, 415 50 Göteborg (SE)
(72) Inventor: Jolkin, Alexei, 41574 Göteborg (SE); Weigand, Stefan Manfred, 97517 Rannungen (DE); Reichert, Juergen, 97499 Donnersdorf (DE); Hofmann, Sabine, 97273 Kürnach (DE); Ramachandran, Sankar, 43145 Mölndal (SE)
(74) Representative: Kuhstrebe, Jochen

(56) References cited:
- FR-A1- 3 053 749
- US-A- 5 234 274
- US-A- 5 474 388

## Description

### Technical field of the invention

The present invention relates to a spherical roller bearing. Furthermore, the present invention relates to a bearing arrangement comprising a spherical roller bearing.

### Background of the invention

Rolling bearings are common mechanical components for many different applications. There are different types of rolling bearings that are designed to meet different requirements. Depending on the conditions of the particular application, i.e., the load level, the rotational speed, the temperature, etc., there are different types of suitable rolling bearings.

A common type of bearing is a spherical roller bearing. The bearing is designed to accommodate large radial loads and axial loads, and it is also designed to accommodate flexing of a shaft supported by the bearings, i.e., the bearing rings can be relatively misaligned. Therefore, such bearings are particularly suitable for more demanding industrial applications such as machines in wind turbines and the like.

In most demanding industrial applications for spherical roller bearings, the most bearing failures are usually related to increased surface-initiated fatigue such as wear. One reason that increased wear occurs may be caused by a displacement of the spherical rollers in the cage which may lead to undesired contact between surfaces and/or increased stress, particularly on the cage. By reducing these undesired contacts and/or stresses a service life of the bearing may increase.

A spherical roller bearing is known from US 5 474 388 A.

It is therefore object of the present invention to provide a spherical roller bearing having an improved service life.

### Summary of the invention

This object is solved by a spherical roller bearing according to claim 1.

In the following, a spherical roller bearing is provided. The spherical roller bearing may be used for supporting a wind turbine main shaft.

The spherical roller bearing comprises at least an outer ring, and an inner ring, wherein the inner ring, two set of spherical rollers which are rolling along raceways formed on the outer and inner ring, and at least one cage configured to retain the rollers. The inner ring has a bore with a diameter of at least 499mm, preferably at least 699mm, and even more preferred at least 899mm. The bore may be adapted to receive a component of another machine, for example a shaft of a wind turbine.

The inner ring may be formed with or without flanges on an axial inner side and/or an axial outer side. If the inner ring is equipped with flanges, flanges may be used as guide flanges for the roller elements. Furthermore, they may also serve as retaining flanges for preventing the rollers from falling out of the bearings.

The at least one cage comprises at least one axial inner cage ring extending in a circumferential direction of the bearing, a first axial outer cage ring spaced from the at least one axial inner cage ring on a first axial side and connected to it with a plurality of cage bars thereby forming closed pockets, wherein each pocket is configured to receive one spherical roller of the first set of rollers and has an axial inner side face and an axial outer side face configured to confine the received spherical roller in the axial direction, and a second axial outer cage ring spaced from the at least one axial inner cage ring on a second axial side opposite of the first axial side and connected to it with a plurality of cage bars thereby forming closed pockets, wherein each pocket is configured to receive one spherical roller of the second set of rollers and has an axial inner pocket side face and an axial pocket outer side face configured to confine the received spherical roller in the axial direction.

The axial inner pocket side face and an axial outer pocket side face may be formed be the axial inner and outer cage ring and/or an element connected to the axial inner and outer cage ring.

In particular, the inventors made the observation that window-type cages in spherical roller bearings may tend to shift during operation to an inner side of the spherical roller bearing.

This can lead to increased wear on the at least one cage and/or the spherical rollers and/or increased stress in the at least on cage. Both increased wear and increased stress may result in a reduced service life of the spherical roller bearing.

Thus, to improve a service life of the spherical roller bearing, each cage bar has an axially extending curvature in the circumferential direction, wherein the curvature is at least partially concave, and wherein, in the axial direction, a distance between an apex of the curvature and the axial inner pocket side face differs from a distance between the apex of the curvature and the axial outer pocket side face. For example, the difference between the distance between the apex of the curvature and the axial inner pocket side face and the distance between the apex of the curvature and the axial outer pocket side face may be 0.5 mm, preferably 1mm.

Providing the cage bar with a curvature in the circumferential direction such that the distance between the apex of the curvature and the axial inner pocket side face differs from the distance between the apex of the curvature and the axial outer pocket side face allows to shift a position of the spherical roller in the cage pocket towards the outside of the spherical roller bearing. This may further allow to compensate for an axial displacement between the spherical roller and the cage due to gravity and/or contact angle. This may reduce a wear on the cage and/or the spherical rollers, thereby improving a service life of the spherical roller bearing.

According to a further embodiment, the distance between the apex of the curvature and the axial inner pocket side face may be larger than the distance between the apex of the curvature and the axial outer pocket side face.

This may allow to provide a defined positional relation between the at least one cage and the spherical roller which can lead to a reduced relative motion between the cage and the spherical roller. Reducing the relative motion between the cage and the spherical roller may reduce contact stresses on the at least one cage. More specifically, in order to prevent any occurrences of undesired interferences between the cage and the spherical roller a minimal axial play between the roller and axial inner pocket side face and axial outer pocket side face should be maintained. Since the direction is known to which the cage may tend to move, it may be possible to design the cage such that a surface of the cage, which is most likely coming into contact with the spherical roller anyways, may be already configured as a contact surface, thereby allowing to make any tolerance compensations on another surface. This may further allow to keep the total tolerance deviations small.

According to a further embodiment, a radius of the curvature may be adapted to form an osculation with a crowning of the spherical roller.

**In** particular, a well determined position of a contact between the cage bar and the spherical roller which may be achieved by adapting the radius of the circumferential cage bar side face in the axial direction to form an osculation with the crowning of the spherical roller may allow for an improved contact between the cage bar and the spherical roller. This may reduce a contact stress between the spherical roller and the cage bar.

In particular, the osculation may be between 100% and 104%, preferably between 100,5% and 103%. Moreover, the osculation may be defined by the radius of the curvature of the cage bar divided by the radius of the crowning of the spherical roller.

In particular, an osculation of 100% may be referred to as a very tight osculation, while an osculation of 104% may be referred to as a very loose osculation. Furthermore, a loose osculation may lead to increased contact stresses in a center position of the cage and may result in a smaller contact ellipse. On the other hand, a tighter osculation may lead to reduced contact stresses in center position and may result in a larger contact ellipse.

According to a further embodiment, an outer axial clearance between the axial outer pocket side face and an outer axial side face of the spherical roller is smaller than an inner axial clearance between the at least one axial inner pocket side face and an inner axial side face of the spherical roller.

A smaller outer axial clearance between the axial outer pocket side face and an outer axial side face of the spherical roller compared to the inner axial clearance between the axial inner pocket side face and an inner axial side face of the spherical roller may result in a more precisely defined spherical roller position in the pocket in operation. This may reduce the cage bar contact stress in operation and may improve the overall performance of the spherical roller bearing.

According to a further embodiment, the cage bars are at least partially arranged at a position in a radial direction that is offset to a pitch diameter. This may allow to increase the basic dynamic load rating of the spherical roller bearing.

The term "pitch diameter" may describe the diameter on which the center points of the spherical rollers will run during operation.

For example, the cage bars may be arranged at a distance from the raceway of the inner or outer ring in the radial direction that corresponds to 10 to 40 % of a diameter of a spherical roller, or 60 to 90% of the diameter of the spherical roller, respectively.

Arranging the cage bars at a position in a radial direction that is at least partially offset to a pitch diameter may allow to decrease a distance between two neighboring rollers such that it may be possible to increase the number of rollers in a set of rollers. In addition, arranging the cage bars at a position in a radial direction that is at least partially offset to a pitch diameter may allow to increase a width of the cage bar even with very small minimal roller distance. More particularly, increasing the number of rollers in the set of rollers may have the advantage that the basic dynamic load rating of the spherical roller bearing can be increased without the necessity of adapting the outer ring and/or inner ring of the bearing.

According to a further embodiment, the at least one cage may be made from sheet metal.

Using sheet metal as the base material for the at least one cage may have the advantage of reducing the costs for the at least one cage.

Alternatively, the cage may be made from a casted material or machined from a solid material.

According to a further embodiment, the pockets may be formed by pressing and coining and/or milling.

According to a further embodiment, the axial inner cage ring consists of two separate ring elements.

Two separate cages may allow for one set of rollers to have a different rotational speed than the other row. This may reduce the forces that act on each cage compared to a cage which couple the two set of rollers. Alternatively, the first and second cage may be separate from each other, but also arranged so close to each other that it may be possible for the first and second cage to support each other while still be able to have a relative movement.

Preferably, a gap may be formed between the first and second ring elements of the axial inner cage ring.

A gap between the first and second ring elements of the axial inner cage ring may allow to improve a lubricant flow to the inner ring of the spherical roller bearing.

According to a further embodiment, the axial inner cage ring comprises a first ring elements and a second ring element which are fixed to each other.

This may have the advantage that the at least one cage may be formed by two identical cages that are fixed to each other. This may allow for an easier manufacturing process for the at least one cage.

According to a further aspect, a bearing arrangement for a wind turbine main shaft is provided, wherein the bearing arrangement includes at least one spherical roller bearing as described above.

All features described above with respect to the spherical roller bearing apply - separately or in combination - to the spherical roller bearing used in the bearing arrangement.

Further preferred embodiments are defined in the dependent claims as well as in the description and the figures. Thereby, elements described or shown in combination with other elements may be present alone or in combination with other elements without departing from the scope of protection.

### Brief description of the drawings

In the following, preferred embodiments of the invention are described in relation to the drawings, wherein the drawings are exemplarily only, and are not intended to limit the scope of protection. The scope of protection is defined by the accompanied claims, only.

The figures show:
Fig. 1: shows a schematic cross section of a spherical roller bearing according to an embodiment,
Fig. 2: shows a schematic perspective view of a part of a cage of the spherical roller bearing according to the embodiment,
Fig. 3: shows a schematic section along an axis of a spherical roller in a pocket of the cage of the spherical roller bearing of Fig. 1 and a line of contact between the spherical roller and the cage,
Fig. 4: shows the detail IV of Fig. 3, and
Fig. 5: shows the detail V of Fig. 3.

### Detailed description of the invention

In the following same or similar functioning elements are indicated with the same reference numerals.

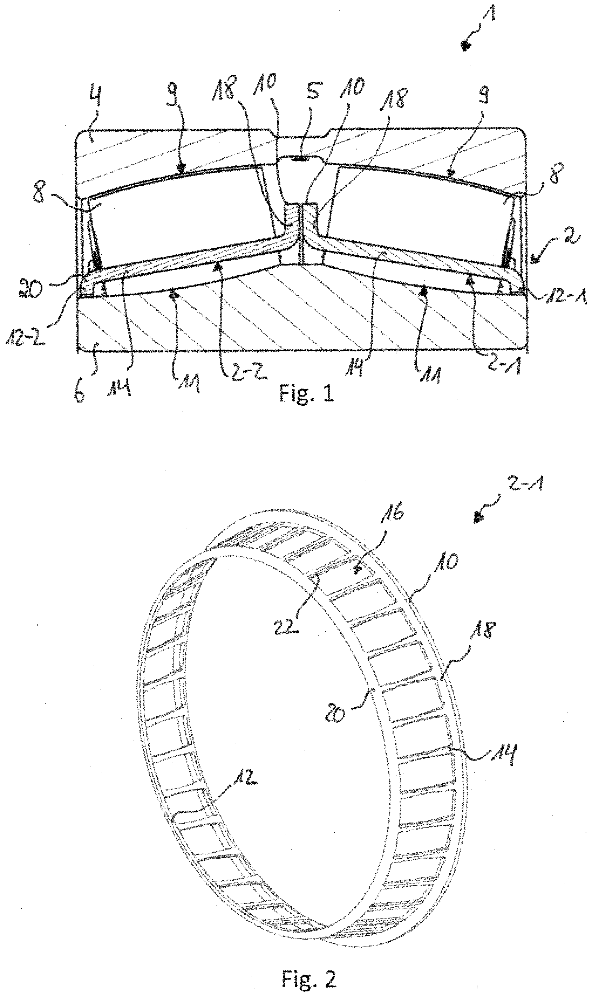

Fig. 1 and 2 show a spherical roller bearing 1 for supporting a wind turbine main shaft as well as a part of a cage 2 of the spherical roller bearing 1.

The spherical roller bearing 1 comprises an outer ring 4, and an inner ring 6, two set of spherical rollers 8 which are rolling along raceways 9 formed on the outer ring 4 and on raceways 11 formed on the inner ring 6. The outer ring 4 comprises an opening 5 through which lubricant can be provided to the spherical roller bearing 1.

The inner ring 6 may be formed with flanges or without flanges on an axial inner side and/or an axial outer side. The spherical roller bearing shown in Fig. 1 is formed without flanges on both the axial inner side and the axial outer side of the inner ring 6.

Furthermore, the spherical roller bearing comprises a cage 2 configured to retain both sets of spherical rollers 8. The cage 2 of the spherical roller bearing shown in Fig. 1 comprises a first cage element 2-1 configured to retain the first set of spherical rollers 8, and a second cage element 2-2 which are identical in shape and connected to each other to form the cage 2. Fig. 2 shows the first cage element 2-1 in detail.

As an alternative, the cage 2 may be formed in one piece such that the cage 2 comprises only one axial inner cage ring 10 instead of two axial inner cage rings 10 that are fixed to each other.

Alternatively, the cage elements 2-1, 2-2 may be formed separate from each other such that a gap may be formed between the cage elements 2-1, 2-2.

Each cage element 2-1, 2-2 comprises an axial inner cage ring 10 extending in a circumferential direction of the bearing, an axial outer cage ring 12 axially spaced from the axial inner cage ring 10 and connected to it with a plurality of cage bars 14 thereby forming closed pockets 16. Each pocket 16 is configured to receive one spherical roller 8 and has an axial inner pocket side face (indicated by dashed line 40), and an axial outer pocket side face (indicated by dashed line 42) configured to confine the received spherical roller 8 in the axial direction.

The axial inner cage ring 10 has a flange element 18 radially to the outside, and the axial outer cage ring 12 has a flange element 20 radially extending to the inside.

Moreover, the cage bars 14 are at least partially arranged at a position that is at least partially offset to the radial inside of a pitch diameter of the spherical roller bearing 1. Preferably, the position corresponds to 10 to 40 % of the diameter of the spherical roller 8 used in the spherical roller bearing 1.

Arranging the cage bars 14 offset to the pitch diameter may allow to decrease a minimal distance between the raceways of two neighboring rollers 8 such that it may be possible to increase the number of rollers used in a set of rollers 8. The minimal distance Dm is determined in a condition in which the spherical rollers 8 are equally spaced in the circumferentially direction.

In particular, a ratio Dm/Dw of the minimal distance in the circumferential direction between the raceways of two neighboring spherical rollers 8 of the first and/or second set of spherical rollers to the maximal roller diameter Dw is equal to or below 0.11, preferably 0.09, and even more preferred 0.075, when the spherical rollers 8 of the respective set of rollers 8 are equally spaced in the circumferentially direction.

Alternatively or additionally, the minimal distance Dm in the circumferential direction between the raceways of two neighboring spherical rollers of the first and/or second set of spherical rollers may be equal to or below a value obtained by the following equation: $Dm \leq 0.0064 mm ⋅ {\left(ln\left(P⋅Dw+Dw\right)\right)}^{3}$ when the spherical rollers 8 of the respective set of rollers 8 are equally spaced in the circumferentially direction, wherein P is the pitch diameter and Dw is the maximal roller diameter, wherein the millimeter values of P and Dw are to be used as dimensionless variables.

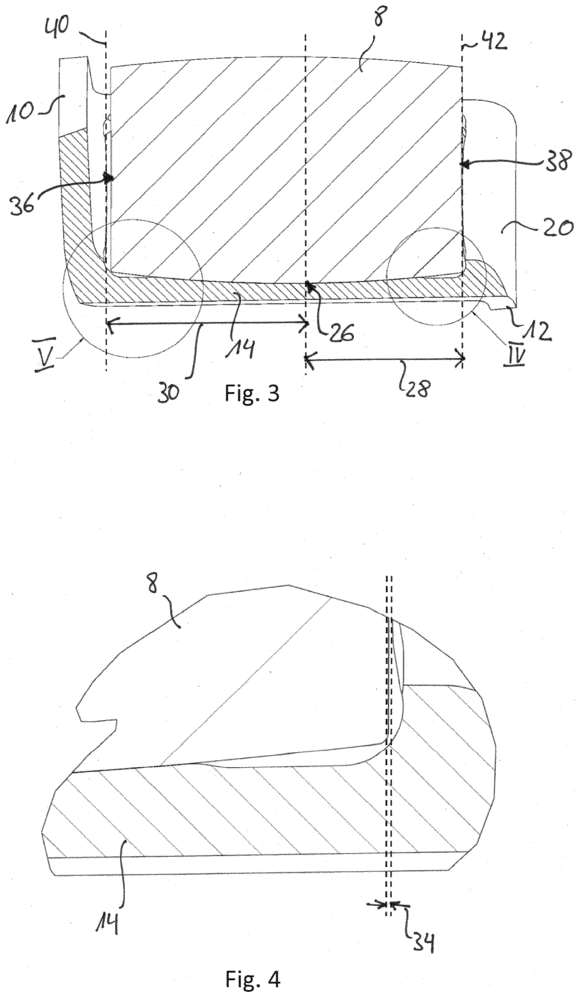

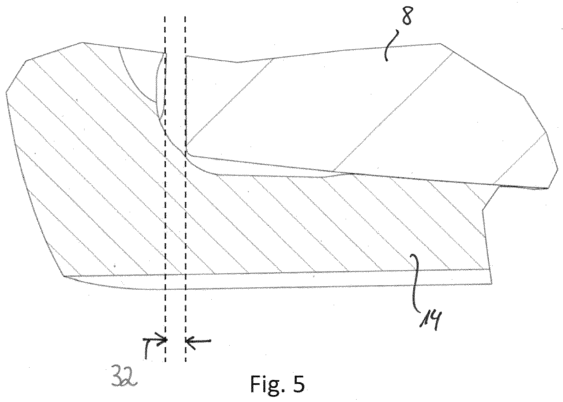

Fig. 3 shows a schematic section along an axis of the spherical roller 8 in the pocket 16 and a line of contact between the spherical roller 8 and the cage, Fig. 4 shows the detail IV of Fig. 3, and Fig. 5 shows the detail V of Fig. 3.

As can be seen from Fig. 3, the cage bar 14 has a concave curvature in the axial direction at a circumferential side face 22. The curvature is such that, in the axial direction, a distance 30 between an apex 26 of the curvature and the axial inner pocket side face 40 is larger than the distance 28 between the apex 26 of the curvature and the axial outer pocket side face 42. This results in an asymmetric cage pocket geometry.

A radius of the curvature is adapted to form an osculation with a crowning of the spherical roller 8, wherein the osculation is between 100% and 104%, preferably between 100,5% and 103%.

As can be seen from Fig. 4 and Fig. 5, an outer axial clearance 34 (Fig. 5) between the axial outer pocket side face 42 and an outer axial side face 38 of the spherical roller 8 is smaller than an inner axial clearance 32 between the axial inner pocket side face 40 and an inner axial side face 36 of the spherical roller 8.

In summary, the geometry of the cage pocket 16 may be optimized by compensating for the axial displacement of the cage 2 due to gravity and contact angle. This may result in a more precisely defined roller position in the pocket in operation. This may also allow to select a tighter osculation of the side surface 22 of the cage bar 14, which is configured to contact a surface of the spherical roller 8 receive in the pocket 16. A tighter osculation may reduce the cage bar contact stress in operation and may improve the overall performance of the spherical roller bearing.

### Reference numerals

- 1: spherical roller bearing
- 2: cage
- 2-1, 2-2: cage element
- 4: outer ring
- 5: opening
- 6: inner ring
- 8: spherical roller
- 9: outer raceway
- 10: axial inner cage ring
- 11: inner raceway
- 12-1, 12-2: axial outer cage ring
- 14: cage bar
- 16: pocket
- 18: flange element
- 20: flange element
- 22: side face
- 26: apex
- 28: distance
- 30: distance
- 32: inner axial clearance
- 34: outer axial clearance
- 36: inner roller side face
- 38: outer roller side face
- 40: axial inner pocket side face
- 42: axial outer pocket side face

## Claims

1. Spherical roller bearing (1), in particular for supporting a wind turbine main shaft, comprising:
at least an outer ring (4), and an inner ring (6), wherein the inner ring (6) has a bore having a diameter of at least 499mm,
two set of spherical rollers (8) which are rolling along raceways formed on the outer and inner ring (4, 6), and
at least one cage (2) configured to retain the spherical rollers (8), wherein the at least one cage (2) comprises at least one axial inner cage ring (10) extending in a circumferential direction of the spherical roller bearing (1), a first axial outer cage ring (12-1) spaced from the at least one axial inner cage ring (10) on a first axial side and connected to it with a plurality of cage bars (14) thereby forming closed pockets (16), wherein each pocket (16) is configured to receive one spherical roller (8) of the first set of spherical rollers (8) and has an axial inner pocket side face (40) and an axial outer pocket side face (42) configured to confine the received spherical roller (8) in the axial direction, and a second axial outer cage ring (12-2) spaced from the at least one axial inner cage ring (10) on a second axial side opposite of the first axial side and connected to it with a plurality of cage bars (14) thereby forming closed pockets (16), wherein each pocket (16) is configured to receive one spherical roller (8) of the second set of spherical rollers (8) and has an axial inner pocket side face (40) and an axial outer pocket side face (42) configured to confine the received spherical roller (8) in the axial direction, **characterized in that** each cage bar (14) has an axially extending curvature in the circumferential direction, wherein the curvature is at least partially concave, and wherein, in the axial direction, a distance (30) between an apex (26) of the curvature and the axial inner pocket side face (40) differs from a distance (28) between the apex (26) of the curvature and the axial outer pocket side face (42).

2. Spherical roller bearing (1) according to claim 1, wherein the distance (30) between the apex (26) of the curvature and the axial inner pocket side face (40) is larger than the distance (28) between the apex (26) of the curvature and the axial outer pocket side face (42).

3. Spherical roller bearing (1) according to claim 1 or 2, wherein a radius of the curvature is adapted to form an osculation with a crowning of the spherical roller (8).

4. Spherical roller bearing (1) according to claim 3, wherein the osculation is between 100% and 104%.

5. Spherical roller bearing (1) according to any one of the previous claims, wherein an outer axial clearance (34) between the axial outer pocket side face (42) and an outer axial side face (38 of the spherical roller (8) is smaller than an inner axial clearance (32) between the at least one axial inner pocket side face (40)and an inner axial side face (36) of the spherical roller (8).

6. Spherical roller bearing (1) according to any one of the previous claims, wherein the cage bars (14) are arranged at a position in a radial direction that is offset to a pitch diameter.

7. Spherical roller bearing (1) according to claim 6, wherein the cage bars (14) are arranged on a radially inner side of the pitch diameter.

8. Spherical roller bearing (1) according to any one of the previous claims, wherein the axial inner cage ring (10) consists of two separate ring elements.

9. Spherical roller bearing (1) according to claim 8, wherein a gap is formed between the first and second ring elements of the axial inner cage ring (10).

10. Spherical roller bearing (1) according to any one of the claims 1 to 7, wherein the axial inner cage ring (10) comprises a first ring element and a second ring element which are fixed to each other.

11. Spherical roller bearing (1) according to any one of the previous claims, wherein the at least one cage (2) is manufactured from a sheet metal plate.

12. Bearing arrangement for a wind turbine main shaft, wherein the bearing arrangement includes at least one spherical roller bearing (1) according to any one of the previous claims.

## Patentansprüche

1. Pendelrollenlager (1), insbesondere zum Stützen einer Windturbinen-Hauptwelle, umfassend:
mindestens einen Außenring (4) und einen Innenring (6), wobei der Innenring (6) eine Bohrung mit einem Durchmesser von mindestens 499 mm aufweist,
zwei Sätze von Tonnenrollen (8), die auf Laufbahnen abrollen, die an dem Außen- und dem Innenring (4, 6) gebildet sind, und
mindestens einen Käfig (2), der dazu eingerichtet ist, die Tonnenrollen (8) zurückzuhalten, wobei der mindestens eine Käfig (2) umfasst: mindestens einen axialen inneren Käfigring (10), der sich in einer Umfangsrichtung des Pendelrollenlagers (1) erstreckt, einen ersten axialen äußeren Käfigring (12-1), der von dem mindestens einen axialen inneren Käfigring (10) auf einer ersten axialen Seite beabstandet ist und durch mehrere Käfigstege (14) mit ihm verbunden ist, wodurch geschlossene Taschen (16) gebildet sind, wobei jede Tasche (16) dazu eingerichtet ist, eine Tonnenrolle (8) des ersten Satzes von Tonnenrollen (8) aufzunehmen, und eine axiale innere Taschenseitenfläche (40) und eine axiale äußere Taschenseitenfläche (42) aufweist, die dazu eingerichtet sind, die aufgenommene Tonnenrolle (8) in der axialen Richtung zu beschränken, und einen zweiten axialen äußeren Käfigring (12-2), der von dem mindestens einen axialen inneren Käfigring (10) auf einer zweiten axialen Seite gegenüber der ersten axialen Seite beabstandet ist und durch mehrere Käfigstege (14) mit ihm verbunden ist, wodurch geschlossene Taschen (16) gebildet sind, wobei jede Tasche (16) dazu eingerichtet ist, eine Tonnenrolle (8) des zweiten Satzes von Tonnenrollen (8) aufzunehmen, und eine axiale innere Taschenseitenfläche (40) und eine axiale äußere Taschenseitenfläche (42) aufweist, die dazu eingerichtet sind, die aufgenommene Tonnenrolle (8) in der axialen Richtung zu beschränken, **dadurch gekennzeichnet, dass** jeder Käfigsteg (14) eine sich axial erstreckende Krümmung in der Umfangsrichtung aufweist, wobei die Krümmung mindestens teilweise konkav ist, und wobei in der axialen Richtung eine Distanz (30) zwischen einem Scheitelpunkt (26) der Krümmung und der axialen inneren Taschenseitenfläche (40) sich von einer Distanz (28) zwischen dem Scheitelpunkt (26) der Krümmung und der axialen äußeren Taschenseitenfläche (42) unterscheidet.

2. Pendelrollenlager (1) nach Anspruch 1, wobei die Distanz (30) zwischen dem Scheitelpunkt (26) der Krümmung und der axialen inneren Taschenseitenfläche (40) größer ist als die Distanz (28) zwischen dem Scheitelpunkt (26) der Krümmung und der axialen äußeren Taschenseitenfläche (42).

3. Pendelrollenlager (1) nach Anspruch 1 oder 2, wobei ein Radius der Krümmung so angepasst ist, dass eine Schmiegung mit einer Balligkeit der Tonnenrolle (8) gebildet ist.

4. Pendelrollenlager (1) nach Anspruch 3, wobei die Schmiegung zwischen 100 % und 104 % beträgt.

5. Pendelrollenlager (1) nach einem der vorangehenden Ansprüche, wobei ein äußeres Axialspiel (34) zwischen der axialen äußeren Taschenseitenfläche (42) und einer äußeren axialen Seitenfläche (38) der Tonnenrolle (8) kleiner ist als ein inneres Axialspiel (32) zwischen der mindestens einen axialen inneren Taschenseitenfläche (40) und einer inneren axialen Seitenfläche (36) der Tonnenrolle (8).

6. Pendelrollenlager (1) nach einem der vorangehenden Ansprüche, wobei die Käfigstege (14) an einer Position in einer radialen Richtung angeordnet sind, die zu einem Teilkreisdurchmesser versetzt ist.

7. Pendelrollenlager (1) nach Anspruch 6, wobei die Käfigstege (14) auf einer radial inneren Seite des Teilkreisdurchmessers angeordnet sind.

8. Pendelrollenlager (1) nach einem der vorangehenden Ansprüche, wobei der axiale innere Käfigring (10) aus zwei separaten Ringelementen besteht.

9. Pendelrollenlager (1) nach Anspruch 8, wobei zwischen dem ersten und dem zweiten Ringelement des axialen inneren Käfigrings (10) ein Spalt gebildet ist.

10. Pendelrollenlager (1) nach einem der Ansprüche 1 bis 7, wobei der axiale innere Käfigring (10) ein erstes Ringelement und ein zweites Ringelement, die aneinander befestigt sind, umfasst.

11. Pendelrollenlager (1) nach einem der vorangehenden Ansprüche, wobei der mindestens eine Käfig (2) aus einer Blechplatte hergestellt ist.

12. Lageranordnung für eine Windturbinen-Hauptwelle, wobei die Lageranordnung mindestens ein Pendelrollenlager (1) nach einem der vorangehenden Ansprüche aufweist.

## Revendications

1. Roulement à rouleaux sphérique (1), notamment de support d'un arbre principal d'éolienne, comprenant :
au moins une bague extérieure (4), et une bague intérieure (6), la bague intérieure (6) ayant un alésage présentant un diamètre d'au moins 499 mm,
deux jeux de rouleaux sphériques (8) qui roulent le long de chemins de roulement formés sur les bagues extérieure et intérieure (4, 6), et
au moins une cage (2) conçue pour retenir les rouleaux sphériques (8), dans lequel la ou les cages (2) comprennent au moins une bague de cage intérieure axiale (10) s'étendant dans une direction circonférentielle du roulement à rouleaux sphérique (1), une première bague de cage extérieure axiale (12-1) espacée de la ou des bagues de cage intérieures axiales (10) sur un premier côté axial et reliée à celles-ci avec une pluralité de barrettes de cage (14) formant ainsi des alvéoles fermées (16), dans lequel chaque alvéole (16) est conçue pour recevoir un rouleau sphérique (8) du premier jeu de rouleaux sphériques (8) et a une face latérale d'alvéole intérieure axiale (40) et une face latérale d'alvéole extérieure axiale (42) conçues pour confiner le rouleau sphérique reçu (8) dans la direction axiale, et une seconde bague de cage extérieure axiale (12-2) espacée de la ou des bagues de cage intérieures axiales (10) sur un second côté axial opposé au premier côté axial et reliée à celles-ci avec une pluralité de barrettes de cage (14) formant ainsi des alvéoles fermées (16), dans lequel chaque alvéole (16) est conçue pour recevoir un rouleau sphérique (8) du second jeu de rouleaux sphériques (8) et a une face latérale d'alvéole intérieure axiale (40) et une face latérale d'alvéole extérieure axiale (42) conçues pour confiner le rouleau sphérique reçu (8) dans la direction axiale, **caractérisé en ce que** chaque barrette de cage (14) présente une courbure s'étendant axialement dans la direction circonférentielle, dans lequel la courbure est au moins en partie concave, et dans lequel, dans la direction axiale, une distance (30) entre un sommet (26) de la courbure et la face latérale d'alvéole intérieure axiale (40) est différente d'une distance (28) entre le sommet (26) de la courbure et la face latérale d'alvéole extérieure axiale (42).

2. Roulement à rouleaux sphériques (1) selon la revendication 1, dans lequel la distance (30) entre le sommet (26) de la courbure et la face latérale d'alvéole intérieure axiale (40) est supérieure à la distance (28) entre le sommet (26) de la courbure et la face latérale d'alvéole extérieure axiale (42).

3. Roulement à rouleaux sphériques (1) selon la revendication 1 ou 2, dans lequel un rayon de la courbure est adapté pour former une osculation avec un bombé du rouleau sphérique (8).

4. Roulement à rouleaux sphériques (1) selon la revendication 3, dans lequel l'osculation est comprise entre 100 % et 104 %.

5. Roulement à rouleaux sphériques (1) selon l'une quelconque des revendications précédentes, dans lequel un dégagement axial extérieur (34) entre la face latérale d'alvéole extérieure axiale (42) et une face latérale extérieure axiale (38) du rouleau sphérique (8) est inférieur à un dégagement axial intérieur (32) entre la ou les faces latérales d'alvéole intérieures axiales (40) et une face latérale intérieure axiale (36) du rouleau sphérique (8).

6. Roulement à rouleaux sphériques (1) selon l'une quelconque des revendications précédentes, dans lequel les barrettes de cage (14) sont disposées à une position dans une direction radiale qui est décalée par rapport à un diamètre primitif.

7. Roulement à rouleaux sphériques (1) selon la revendication 6, dans lequel les barrettes de cage (14) sont disposées sur un côté radialement intérieur du diamètre primitif.

8. Roulement à rouleaux sphériques (1) selon l'une quelconque des revendications précédentes, dans lequel la bague de cage intérieure axiale (10) est constituée de deux éléments de bague séparés.

9. Roulement à rouleaux sphériques (1) selon la revendication 8, dans lequel un espace est formé entre les premier et second éléments de bague de la bague de cage intérieure axiale (10).

10. Roulement à rouleaux sphériques (1) selon l'une quelconque des revendications 1 à 7, dans lequel la bague de cage intérieure axiale (10) comprend un premier élément de bague et un second élément de bague qui sont fixés l'un à l'autre.

11. Roulement à rouleaux sphériques (1) selon l'une quelconque des revendications précédentes, dans lequel la ou les cages (2) sont fabriquées à partir d'une plaque de tôle.

12. Agencement de roulement pour un arbre principal d'éolienne, dans lequel l'agencement de roulement comprend au moins un roulement à rouleaux sphériques (1) selon l'une quelconque des revendications précédentes.
